## Europäisches Patentamt

## European Patent Office

## Office européen des brevets

(19)

(11) Veröffentlichungsnummer: **0 152 495**
**B1**

(12)

# EUROPÄISCHE PATENTSCHRIFT

(45) Veröffentlichungstag der Patentschrift.
**20.05.87**

(51) Int. Cl.⁴: **F 16 C 29/06**

(21) Anmeldenummer: **84101451.7**

(22) Anmeldetag: **13.02.84**

(54) **Kugelbüchse.**

(43) Veröffentlichungstag der Anmeldung:
**28.08.85 Patentblatt 85/35**

(45) Bekanntmachung des Hinweises auf die Patenterteilung·
**20.05.87 Patentblatt 87/21**

(84) Benannte Vertragsstaaten:
**CH DE FR GB IT LI SE**

(56) Entgegenhaltungen.
**EP-A-0 080 034**
**CH-A-527 378**
**US-A-3 476 445**

(73) Patentinhaber: **SRO Kugellagerwerke J. Schmid-Roost AG, Oerlikonerstrasse 70, CH- 8050 Zurich (CH)**

(72) Erfinder: **Borel, Denis, Rosenbergstrasse 51, CH-8304 Wallisellen (CH)**

(74) Vertreter **Rehmann, Klaus H., Postfach 1310 Hauptbahnhofstrasse, D-8720 Schweinfurt (DE)**

LIBER. STOCKHOLM 1987

## Beschreibung

Die Erfindung bezieht sich auf eine auf einer Welle anbringbare Kugelbüchse, bestehend aus einer aus verformtem Material gefertigten, zylindrischen Hülse in welcher in sich geschlossene Kugelumläufe mit jeweils einer tragenden und einer nichttragenden Kugelreihe angeordnet sind, wobei diese Kugelumläufe jeweils aus zwei in Achsrichtung verlaufenden und zwei diese verbindenden, kurvenförmigen Teilstrecken bestehen und wobei pro Kugelumlauf je eine achsparallele, zur Führung der Kugeln dienede Stahl nadel vorgesehen ist.

Kugelbüchsen der eingangs beschriebenen Gattung sind aus der EP-A- 80 034 entnehmbar und sind sowohl in ihren beiden Axial- als auch in beiden Rotationsrichtungen frei bewegbar.

Bei Handhabungsgeräten, Manipulator oder auch Roboter genannt, ist es teilweise erforderlich, daß bei axial freibeweglicher Führung, z. B. einer Kugelbüchse, in Rotationsrichtung Kraft übertragbar sein muß.

Auch an Textilmaschinen sind längsverschieblich angeordnete Arbeitsgerätschaften, Vorrichtungen und Abdeckungen. bekannt, die sowohl in beiden Axialrichtungen als auch in einer Rotationsrichtung frei beweglich gelagert sind und in der zweiten Rotationsrichtung durch Gesperre, Ratschen oder dergleichen blockiert werden.

Derartige Gesperre, Ratschen etc. müssen zusätzlich zu den Lagerungen angebracht, eingestellt und gewartet werden. Bei nicht ordnungsgemäßer Einstellung besteht die Gefahr der Beschädigung, da sie in der blockierten Richtung "unnachgiebig" befestigt sind.

Die Erfindung hat sich die Aufgabe gestellt eine auf einer Welle anbringbare Kugelbüchse zu schaffen die sowohl in beiden Axialrichtungen als auch in einer Rotationsrichtung frei beweglich, in der zweiten Rotationsrichtung jedoch ohne zu blockieren, schwergängig ist.

Die Aufgabe wird erfindungsgemäß dadurch gelöst, daß bei einer Kugelbüchse der eingangs beschriebenen Gattung, die Verbindungslinie der Mittelpunkte der jeweils tragenden Kugeln zu der Mittelachse der Nadel und zur Mittelachse der Welle einen in Richtung der nichttragenden Kugelreihe weisenden Winkel bilden, der kleiner als 180° aber größer als 170° ist.

In weiterer Ausgestaltung des Erfindungsgedankens hat es sich als vorteilhaft erwiesen, daß der Winkel eine Größe zwischen 174° und 178° aufweist.

Vorteilhaft ist auch eine variable Ausbildung des Winkels derart, daß der Winkel in der Mitte der Stahlnadellängserstreckung mit seinem Maximum und zu den Stahlnadelenden hin kleiner werdend ausgebildet ist.

Eine derartige Ausbildung wird durch eine Krümmung der in der Hülse eingearbeiteten, in Achsrichtung verlaufenden, die tragenden Kugeln aufnehmenden Teilstrecke des Kugelumlaufes erzielt.

In weiterer Ausgestaltung des Erfindungsgegenstandes ist es auch vorteilhaft, den Stahlnadeldurchmesser zu den Stahlnadelenden hin verjüngt auszubilden. Durch diese Ausgestaltungen ist, verbunden mit der Eigenelastizität der Hülse, die Möglichkeit gegeben, fertigungsbedingte Toleranzen innerhalb einer Kugelbüchse auszugleichen. Ebenso werden leichte Durchbiegungen der Welle während des Betriebes derart ausgeglichen, daß diese Durchbiegungen keine Auswirkung auf die Anzahl der tatsächlich tragenden Kugeln innerhalb der jeweils tragenden Kugelreihe hat, da alle entsprechenden Kugel zum Tragen herangezogen werden.

In der Zeichnung ist eine beispielsweise Ausführungsform der erfindungsgemäßen Kugelbüchse dargestellt.

Es zeigen:

Fig. 1 eine teilweise geschnittene Seitenansicht der Kugelbüchse, welche auf einem Wellenabschnitt montiert ist

Fig. 2 einen teilweisen Querscnitt der Kugelbüchse gemäß Fig. 1 nach Linie A-A

Fig. 3 einen teilweisen Querschnitt der Kugelbüchse gemäß Fig. 1 nach Linie B-B in vergrößerter Darstellung

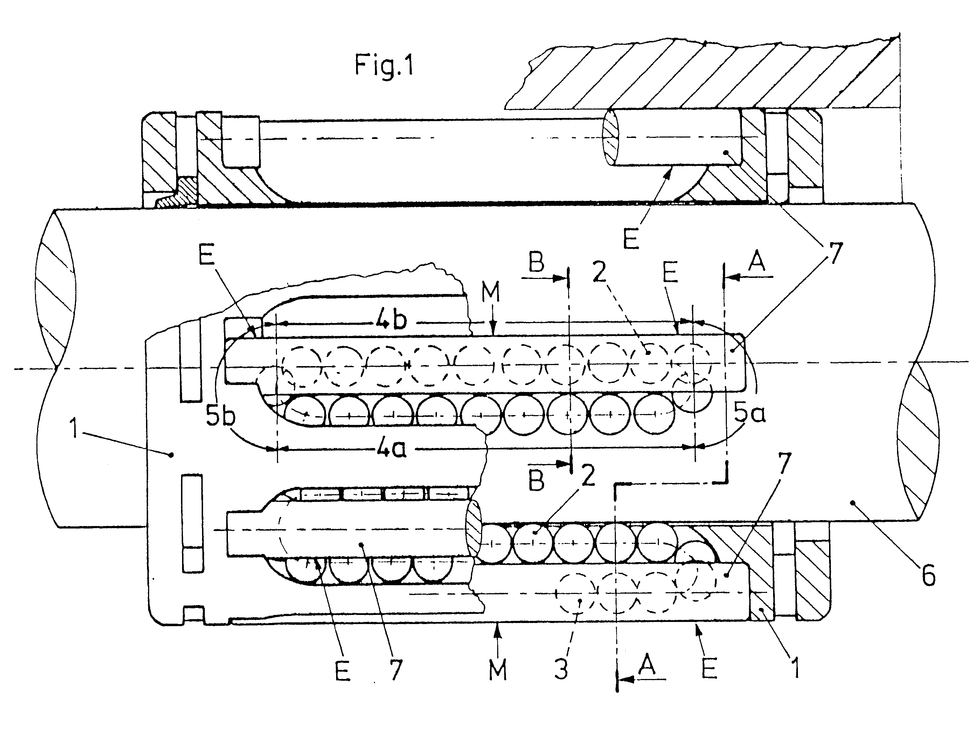

Die Kugelbüchse nach Fig. 1 ist einer lediglich abschnittweise dargestellten Welle 6 montiert und besteht aus einer aus verformbarem Material - vorzugsweise Kunststoff - gefertigten, zylindrischen Hülse 1, in welcher in sich geschlossene Kugelumläufe mit jeweils einer tragenden Kugelreihe 2 und einer nichttragenden Kugelreihe 3 angeordnet sind. Diese Kugelumläufe werden jeweils aus zwei in Achsrichtung verlaufenden Teilstrecken 4a und 4b sowie aus jeweils zwei diese verbindenden kurvenförmigen Teilstrecken 5a und 5b gebildet. Pro Kugelumlauf ist je eine zur Welle 6 achsparallele Stahlnadel 7 angeordnet. Diese Stahlnadeln 7 können je nach Ausführungsform der Kugelbüchse von ihrer Mitte M bis zu ihren beiden Enden E im Durchmesser konstant sein - wie dargestellt - oder eine Form aufweisen, wonach sich der Durchmesser von M ausgehend nach beiden Seiten zu E hin verjüngt. Die Stahlnadeln 7 sind so in der Hülse 1 angeordnet, daß mindestens die Teilstrecken 4b überspannt sind, so daß der Arbeitsbereich der tragenden Kugelreihen 2 durch den Kontakt der Kugel 2 einerseits mit den Stahlnadeln 7 und andererseits mit der Welle 6 gebildet wird.

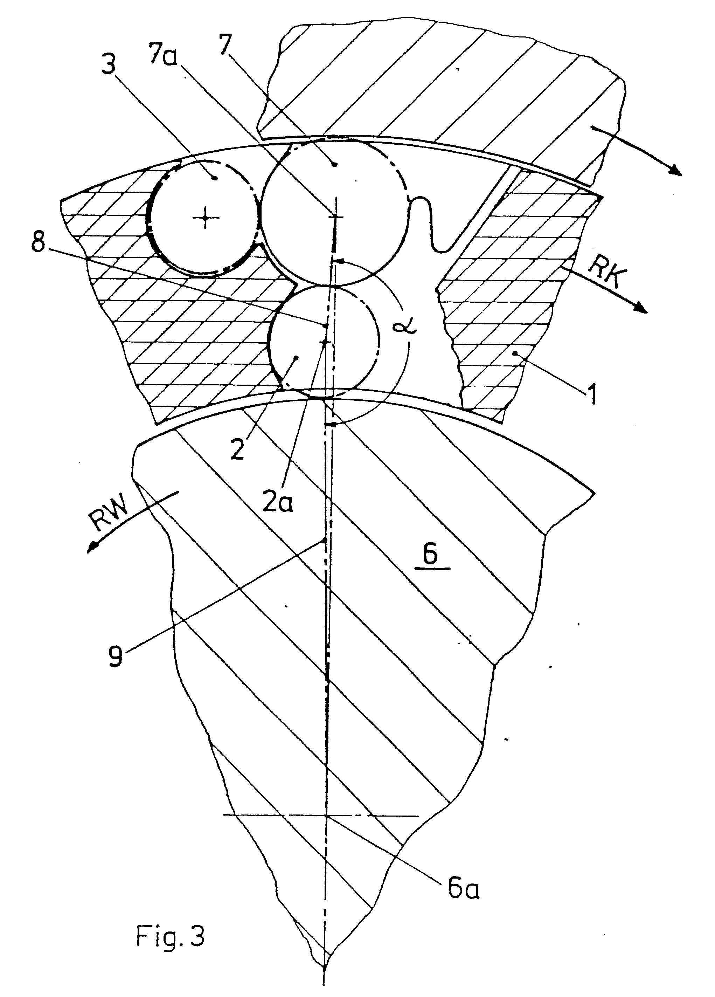

Wie in Fig. 3 dargestellt, sind die tragenden Kugeln 2 so in der Kugelbüchse angeordnet, daß die Verbindungslinie 8, des Kugelmittelpunktes 2a der Kugeln 2 zu der Mittelachse 7a der Stahlnadeln 7, und die Verbindungslinie 9, des Kugelmittelpunktes 2a zu der Mittelachse 6a der Welle 6, einen Winkel bilden, dessen Scheitel in Richtung der nichttragenden Kugelreihen 3 weist. Dieser Winkel muß kleiner als 180° aber größer als 170° sein und vorzugsweise zwischen 174°

und 178˚ ligen.

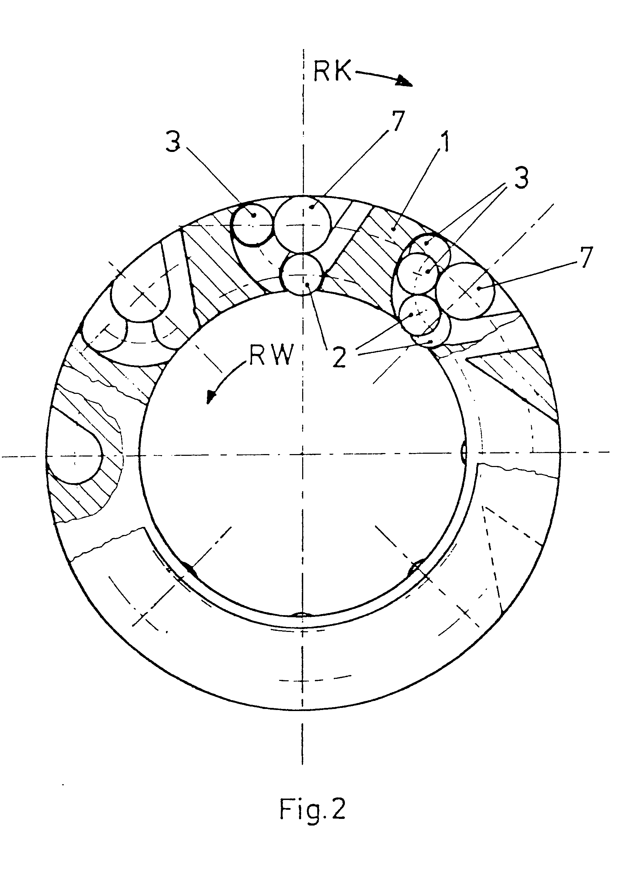

Eine derartige Kugelbüsche ist sowohl in beiden Axialrichtungen als auch in der einen Rotationsrichtung RK der Kugelbüchse bzw. RW der Welle 6 frei beweglich. Entgegen der Rotationsrichtung RK bzw. RW ist sie jedoch ohne zu blockieren schwergängig (Fig. 2 und S).

Wird eine solche Schwergängigkeit in beiden Rotationsrichtungen, d. h. sowohl in Richtung RK bzw. RW als auch entgegen der Richtung RK bzw. RW gewünscht, so läßt sich dieses durch einfaches hintereinander Anordnen zweier solcher Kugelbüchsen erreichen, wenn dabei eine der beiden Kugelbüchsen um 180° in Axialrichtung gedreht auf der Welle 6 angeordnet wird.

**Patentansprüche**

1. Kugelbüchse, welche auf einer Welle anbringbar ist, bestehend aus einer, aus verformtem Material gefertigten, zylindrischen Hülse (1), in welcher in sich geschlossene Kugelumläufe mit jeweils einer tragenden und einer nichttragenden Kugelreihe (2- 3) angeordnet sind, wobei diese Kugelumläufe jeweils aus zwei in Achsrichtung verlaufenden (4a, 4b) und zwei diese verbindenden kurvenförmigen Teilstrecken (5a, 5b) bestehen und wobei pro Kugelumlauf je eine zur Welle (6) achsparallele, zur Führung der Kugeln dienende Stahlnadel (7) vorgesehen ist, dadurch gekennzeichnet, daß die Verbindungslinien (8 und 9) der Mittelpunkte (2a) der jeweils tragenden Kugeln (2) zu der Mittelachse (7a) der Stahlnadeln (7) und zu der Mittelachse (6a) der Welle (6) einen in Richtung der nichttragenden Kugelreihe (3) weisenden Winkel α bilden, der kleiner als 180° aber größer als 170° ist.

2. Kugelbüchse nach Anspruch 1, dadurch gekennzeichnet, daß der Winkel α eine Größe zwischen 174° und 178° aufweist.

3. Kugelbüchse nach Anspruch 1 oder 2, dadurch gekennzeichnet, daß der Winkel α über die Gesamtlänge des Arbeitsbereiches der tragenden Kugelreihe (2) konstant ist.

4. Kugelbüchse nach Anspruch 1 oder 2 dadurch gekennzeichnet, daß der Winkel α in der Mitte (M) der Stahlnadellängserstreckung mit seinem Maximum und zu den Stahlnandelenden (E) hin kleiner werdend ausgebildet ist.

5. Kugelbüchse nach einem oder mehreren der Ansprüche 1 bis 4 dadurch gekennzeichnet, daß der Stahlnadeldurchmesser zu den Stahlnadelenden (E) hin verjüngt ausgebildet ist.

**Claims**

1. A linear motion bearing mountable on a shaft and comprising a cylindrical casing (1) made of a moulded material and incorporating self- contaiped ball-revolving channels each of which accommodates a row (2) of load bearing balls and another row (3) of non-load bearing balls, in which each of the ball channels consists ot two straight sectors (4a, 4b) extending in axial direction and two curved sectors (5a, 5b) connecting the axially extending ones, and in which each ball channel is provided with a steel needle (7) extending parallel with the axis of the shaft (6) and serving to guide the balls, characterized in that respective connecting lines (8 and 9) connecting the centres (2a) of the load bearing balls (2) in each channel to, on the one hand, the axis (7a) of their respective steel needle (7) and, on the other hand, to the axis (6a) of the shaft (6) are inclined at an angle α the apex of which points towards the row (3) of the non-load bearing balls, and in that the angle measurement is below 180° but above 170˚.

2. A linear motion bearing according to claim 1, characterized in that the measurement of the angle α is between 174° and 178°.

3. A linear motion bearing according to claim 1 or claim 2, characterized in that the angle is constant along the total length of the operating range of each row (2) of the load bearing balls.

4. A linear motion bearing according to claim 1 or claim 2, characterized in that the measurement of the angle is widest at the mid-point (M) of the steel needle's longitudinal extent and decreases towards the needle's ends (E).

5. A linear motion bearing according to any one or more of the claims 1 to 4, characterized in that the steel needle's diameter tapers towards its ends (E).

**Revendications**

1. Douille à billes qui peut être montée sur un arbre, formé d'une douille cylindrique (1) fabriquée en matière moulée, dans laquelle sont disposés deux circuits fermés de grilles, comportant chacun une rangée de billes porteuse et une rangée de billes non porteuse (2; 3), ces circuits de billes étant formés chacun de deux tronçons dirigés axialement (4a, 4b) et de deux tronçons courbés (5a, 5b) les reliant, une aiguille en acier (7) parallèle à l'axe de l'arbre (6) et qui sert au guidage des billes étant prévue pour chaque circuit de billes, caractérisée en ce que les lignes de jonction (8 et 9) des centres (2a) des billes porteuses (2) font avec l'axe central (7a) des aiguilles en acier (7) et avec l'axe central (6a) de l'arbre (6) un angle (α) tourné en direction de la rangée de billes non porteuse (3) qui est plus petit que 180˚ mais plus grand que 170 .

2. Douille à billes selon la revendication 1, caractérisée en ce que l'angle présente une grandeur de 174 a 178˚.

3. Douille à billes selon 1 une des revendications 1 ou 2, caractérisée en ce que l'angle α est constant sur toute la longueur de la rangée de billes porteuse (2).

4. Douille a billes selon l'une des revendications 1 ou 2, caractérisée en ce que l'angle $\alpha$ présente son maximum au milieu (M) de l'extension longitudinale de l'aiguille en acier et devient plus petit vers les extrémités (E) de l'aiguille en acier.

5. Douille à billes selon une ou plusieurs des revendications 1 à 3, caractérisée en ce que le diamètre de l'aiguille en acier diminue vers les extrémités (E) de l'aiguille en acier.

Fig.1

0 152 495

Fig.2

Fig. 3